# EUROPÄISCHE PATENTANMELDUNG

(11) **EP 3 581 025 A1**
(43) Veröffentlichungstag der Anmeldung: **18.12.2019**
(21) Anmeldenummer: 19179428.8
(22) Anmeldetag: 11.06.2019
(51) Int. Cl.: A01K 7/06, A01K 7/02

(54) **BEHÄLTER FÜR FLÜSSIGKEIT**

(30) Priorität: 12.06.2018 DE 102018114016
(71) Anmelder: Hosp GmbH, 79771 Klettgau-Griessen (DE)
(72) Erfinder: Hosp, Philipp, 79117 Freiburg (DE)
(74) Vertreter: Patentanwälte Behrmann Wagner PartG mbB

(57) **Zusammenfassung**

Die Erfindung betrifft einen Behälter (2) für Flüssigkeit, umfassend einen zumindest abschnittsweise schalenartigen Grundkörper mit einer Außenwandung (4), die einen Füllraum (18) definiert, einen Außenkörper (6), der die Außenwandung (4) des Grundkörpers zumindest abschnittsweise überdeckt, einen Zulauf (8) für Flüssigkeit in den Außenkörper (6), einen Ablauf (10) für Flüssigkeit aus dem Außenkörper (6), wobei der Außenkörper (6) derart ausgebildet ist, dass die in ihm befindbare Flüssigkeit zum Wärmeaustausch in Kontakt mit der Außenwandung (4) des Grundkörpers kommen kann.

## Beschreibung

Die Erfindung betrifft einen Behälter zur Aufnahme von einer Flüssigkeit zur Vermeidung deren Einfrierens.

Um beispielsweise für Haus- und/oder Nutztiere auch im Winter oder zumindest bei frostigen Temperaturen ein Zufrieren von in einem Tränkebecken oder einem Tränketrog vorhandenen Flüssigkeit zu vermeiden, sind aus der Praxis diverse Lösungsvorschläge bekannt, welche jedoch nicht abschließend überzeugen können.

Aus der Praxis sind Tränkebecken oder Tränketröge für Haustiere oder Nutztiere bekannt, welche einen Frostschutz aufweisen. Hierbei wird eine Gebäudewasserleitung direkt durch einen Füllraum der Tränke geführt, um einen Wärmeaustausch zwischen dem in der Leitung befindlichen Leitungswasser und dem in den Füllraum vorhandenen Trinkwasser zu ermöglichen. Ein erheblicher Nachteil dieser Bauart ist jedoch, dass sich Hinterschnitte ausbilden und daher eine Reinigungsfähigkeit der Tränke erheblich erschwert ist. Zudem wird durch die Gebäudewasserleitung besonders bei kleinen Tränken ein erheblicher Teil freier Trinkfläche versperrt, sodass Tiere eine unnatürliche Trinkhaltung einnehmen müssen und sich eventuell beim Trinken verletzten können. Zudem muss die Tränke größer sein, um den Trinkflächenverlust durch die Versperrung zu kompensieren.

Im Folgenden wird unter "Leitungswasser" das in einer Leitung vorhandene bzw. geführte Wasser und unter "Trinkwasser" das zum Trinken dargebotene Wasser bzw. das in der Tränke vorhandene Wasser verstanden. Die Flüssigkeit kann Wasser sein, welches sich zum Trinken eignet.

In Ställen oder Nutztierhausungen wird üblicherweise das Leitungswasser in den Gebäudewasserleitung dauerhaft zirkuliert mittels einer Pumpe. Die Gebäudewasserleitungen sind also als Kreislauf konstruiert. Zudem wird zumeist dieses Leitungswasser durch entsprechende Wärmetauscher oder dergleichen aufgewärmt und als erwärmtes Leitungswasser durch die Leitungen zirkuliert. Dies schützt die Leitungen vor Frost und soll eine frostfreie bzw. eisfreie Trinkfläche gewährleisten.

Alternativ oder zusätzlich zu einer Führung einer Gebäudewasserleitung durch die Tränke oder einer Erwärmung des Leitungswassers sind weitere Erhitzungsvorrichtungen bekannt, wie beispielsweise Heizkabel oder Heizplatten, die direkt das Tränkebecken erhitzen. Diese Erhitzungsvorrichtungen können direkt an der Tränke angebracht werden, um durch Aufheizen einen Frostschutz zu gewährleisten. Da die Heizkabel oder Heizplatten jedoch zumeist elektrisch betrieben sind, bergen sie die Gefahr von Stromschlägen. Zudem muss ein erheblicher konstruktiver Aufwand betrieben werden, um die nötigen elektrischen Zuleitungen vor Feuchtigkeit oder dem Leitungs- und/oder Trinkwasser zu schützen.

Eine Tränke, die eine Heizplatte in der Realisierung einer elektrisch betriebenen Heizmatte umfasst, ist aus der DE 20 2004 003 665 U1 bekannt.

Der Erfindung liegt daher die Aufgabe zugrunde, einen Behälter für Flüssigkeiten zum Frostschutz vorzuschlagen, welcher die oben genannten bekannten Probleme überwindet, insbesondere dadurch, dass er unter Berücksichtigung von guter Reinigungsfähigkeit und der Vermeidung von Verletzungen eine frostfreie und große Trinkfläche gewährleistet.

Diese Aufgaben sind erfindungsgemäß mit dem Behälter für Flüssigkeit mit den Merkmalen des Anspruchs 1 gelöst.

Zur Lösung der oben genannten Probleme wird nämlich ein Behälter für Flüssigkeit vorgeschlagen, umfassend einen zumindest abschnittsweise schalenartigen Grundkörper mit einer Außenwandung, die einen Füllraum definiert, einen Außenkörper, der die Außenwandung des Grundkörpers zumindest abschnittsweise überdeckt, einen Zulauf für Flüssigkeiten in den Außenkörper, einen Ablauf für Flüssigkeiten aus dem Außenkörper, wobei der Außenkörper derart ausgebildet ist, dass die in ihm befindbare Flüssigkeit zum Wärmeaustausch in Kontakt mit der Außenwandung des Grundkörpers kommen kann.

Der Erfindung liegt nämlich der Gedanke zugrunde, dass eine Flüssigkeit durch Wärmeaustausch mit der Außenwandung, welche wiederum in wärmeaustauschender Beziehung mit einer im Füllraum vorhandbaren Flüssigkeit steht, einen Frostschutz realisiert, der eine maximal große frostfreie Trinkfläche gewährleistet und zudem keine Gesundheitsgefahr für Mensch und Tier darstellt.

Bei einer bevorzugten Ausführungsform des Behälters nach der Erfindung ist der Behälter, insbesondere der Grundkörper, frei von einer Erhitzungsvorrichtung zum Frostschutz. Mit anderen Worten kann ein Frostschutz sogar dann realisiert werden, wenn beispielsweise gar kein Heizkabel oder keine Heizplatte vorhanden ist. Als Erhitzungsvorrichtung wird jede Vorrichtung aufgefasst, welche durch aktives Betreiben eine Wärme an die Umgebung abgibt. Dabei ist beispielsweise das Führen von Leitungswasser vorbei an Trinkwasser und deren Wärmeaustausch ein passiver Wärmeaustausch passiven Betreibens.

Gemäß einer weiteren bevorzugten Ausführungsform des Behälters nach der Erfindung ist der Außenkörper derart ausgebildet, dass die in dem Außenkörper befindbare Flüssigkeit zum Wärmeaustausch in direkten Kontakt mit der Außenwandung des Grundkörpers kommen kann. Durch eine solche Konstruktion trennt ausschließlich die Außenwandung die wärmende Flüssigkeit in dem Außenkörper von der zu erwärmenden Flüssigkeit in dem Füllraum des Grundkörpers. Vermittels der Außenwandung ist daher ein bestmöglicher Wärmeaustausch gewährleistet.

Es ist zudem alternativ oder zusätzlich denkbar, dass der Grundkörper eine Tränkebeckenschale für Haus- und/oder Nutztiere ist. Gerade Nutztiere profitieren in besonderer Weise von den Vorteilen des erfindungsgemäßen Behälters. Es wird nämlich nicht nur eine maximal große und frostfreie Trinkfläche realisierbar sondern zudem eine gesundheitliche Unbeschadetheit gewährleistet dadurch, dass auf stromführende Bauteile und Stromleitungen für beispielsweise Heizkabel oder Heizplatten verzichtet werden kann.

Es ist gemäß einer weiteren bevorzugten Ausführungsform des Behälters nach der Erfindung denkbar, dass er einen Leitungsabschnitt zum Leiten der Flüssigkeit aus dem Ablauf direkt oder indirekt in den Grundkörper umfasst. Durch eine derartige Konstruktion hält sich die durch den Außenkörper fließende Flüssigkeit sozusagen selbst frostfrei. Eine derartige Konstruktion spart Bauraum, da das Wärmeaustauschmedium bzw. die zugeführte Flüssigkeit ohnehin zum Füllen des Füllraumes vorhanden ist.

Gemäß einer weiteren bevorzugten Ausführungsform des Behälters nach der Erfindung bildet der Außenkörper einen Abschnitt einer Flüssigkeitszuleitung und/oder eine Flüssigkeitsableitung für den Grundkörper aus. Dies ist besonders vorteilhaft, da auf einen separaten Wärmeaustauchbehälter verzichtet werden kann. Die zum Füllen des Füllraums vorgesehene Flüssigkeit durchströmt die Flüssigkeitszuleitung und dient dann im Außenkörper als Wärmeaustauschmedium. Diese Konstruktion reduziert die Anzahl benötigter Einzelteile und verringert zudem einen zur Installation nötigen Bauraum. Es ist folglich für die Flüssigkeit eine lineare Strömungsanordnung geschaffen, welche frei von Bypässen ist.

Es ist des weiteren denkbar, dass sich ein Leitungsquerschnitt der Flüssigkeitszuleitung und/oder eine Flüssigkeitsableitung mehrfach ändert. Dadurch ist eine turbulente Strömung der Flüssigkeit gewährt, was insbesondere dazu beiträgt, dass sich die Flüssigkeit in dem Außenkörper stark verwirbelt und in der Flüssigkeit keine beruhigten Zonen entstehen können, welche einen Wärmeaustausch mit der Außenwandung des Grundkörpers reduzieren oder gar verhindern können.

Gemäß einer weiteren bevorzugten Ausführungsform des Behälters nach der Erfindung ist der Außenkörper an der einen vorzugsweise zentralen Bodenbereich des Grundkörpers ausbildenden Außenwandung angeordnet. Diese Ausführungsform ist insbesondere für Behälter von Vorteil, bei welchen eine Flüssigkeitszuleitung von einem Boden her kommt. Der Wärmeaustausch findet somit an dem Bodenbereich des Behälters statt. Es ist jedoch auch denkbar, den Grundkörper an anderen Abschnitten der Außenwandung anzuordnen, beispielsweise an einer Seitenfläche. Denkbar ist jedoch auch, eine zumindest annähernd vollständige Überdeckung der Außenwandung durch den Außenkörper.

Es ist des Weiteren denkbar, dass der Außenkörper 50% bis 100% des Bodenbereichs, vorzugsweise 75% bis 100% des Bodenbereichs, noch mehr bevorzugt einen Anteil des Bodenbereichs überdeckt, der geeignet ist, um einen Frostschutz zu gewährleisten. Dadurch kann ein optimaler Wärmeaustausch gewährleistet werden. Dieser Zusammenhang ist von einer Außentemperatur, der in dem Füllraum üblicherweise vorhandenen Menge an Flüssigkeit und der Flüssigkeitstemperatur im Außenkörper abhängig.

Gemäß einer weiteren bevorzugten Ausführungsform des Behälters nach der Erfindung ist der Abschnitt der Außenwandung, der den Grundkörper von dem Außenkörper trennt, zumindest abschnittsweise konvex und/oder planar ausgebildet. Dadurch, dass die zugeleitete Flüssigkeit auf eine konvexe Fläche trifft, bildet die konvexe Fläche gleichsam eine Leitfläche für die Flüssigkeit aus. Es ist dadurch ein verwirbeltes Einströmen von zugeführter Flüssigkeit in den Außenkörper und eine Durchmischung sowie ein ständiger Austausch der in dem Außenkörper vorhandenen Flüssigkeit gewährleistet.

Gemäß einer weiteren bevorzugten Ausführungsform des Behälters nach der Erfindung ist der Außenkörper druckfest und/oder formschlüssig und/oder stoffschlüssig mit dem Grundkörper verbunden. Bei Anschluss des Behälters beispielsweise an eine typische Wasserleitung ist eine druckfeste Verbindung zur Vermeidung von Leckagen vorteilhaft, da das Leitungswasser mit einem Druck von etwa 4 bar geführt ist. Da die in dem Füllraum befindliche Flüssigkeit einen Druck von etwa 1 bar (Atmosphärendruck) aufweist, liegt zwischen der Flüssigkeit in dem Außenkörper und der Flüssigkeit in dem Grundkörper ein Druckunterschied von mehreren bar vor.

Gemäß einer weiteren bevorzugten Ausführungsform des Behälters nach der Erfindung ist der Außenkörper an der dem Füllraum abgewandten Außensiete der Außenwandung angeordnet. Dadurch kann eine gleichmäßige Form des Füllraums gewährleistet werden, was zu einer guten Reinigungsfähigkeit sowie einem großes Aufnahmevolumen führt.

Weitere Vorteile, Merkmale und Einzelheiten ergeben sich aus der nachfolgenden Beschreibung bevorzugter Ausführungsbeispiele sowie anhand der Zeichnung. Die Zeichnung zeigt in:

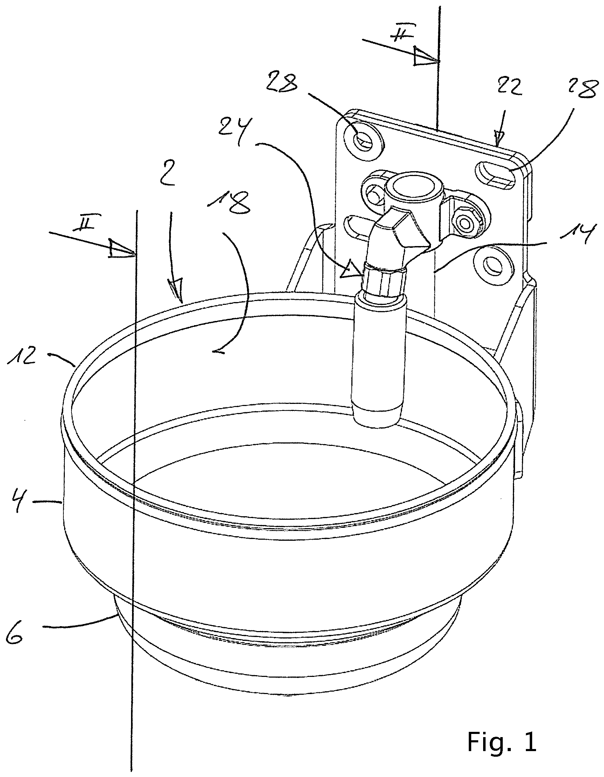

- Fig. 1:: einen erfindungsgemäßen Behälter in einer perspektivischen Ansicht, und
- Fig. 2:: eine Schnittansicht des Behälters nach Fig. 1 entlang einer Linie II - II.

In den Figuren ist ein nach oben offener Behälter 2 für Flüssigkeiten zum Frostschutz gezeigt. Der Behälter 2 weist einen schalenartigen Grundkörper auf, welcher als Tränkebeckenschale 12 für Haus- und/oder Nutztiere ausgebildet ist. Der Grundkörper umfasst eine Außenwandung 4, die einen Füllraum 18 zur Aufnahme von Trinkwasser definiert. In seinem Bodenbereich 16 weist der Grundkörper einen Außenkörper 6 auf, welcher die Außenwandung 4 des Grundkörpers abschnittsweise schalenartig überdeckt. Der Außenkörper 6 ist druckfest ausgebildet und stoffschlüssig mit dem Grundkörper verbunden, bevorzugt mit ihm verschweißt. Der Behälter 2 ist mittels einer Wandhalterung 22 in bekannter Weise an einer Wand oder beispielsweise einem Pfosten festlegbar. Hierzu weist die Halterung 22 Ausnehmungen 28 für Fixiermittel, wie beispielsweise Schrauben, auf. Des Weiteren ist an der Wandhalterung 22 ein Leitungsabschnitt 14 zum Leiten von Leitungswasser in den Füllraum 18 angeordnet. Der Leitungsabschnitt 14 muss jedoch nicht zwingend an der Halterung 22 befestigt sein. Mit dem Leitungsabschnitt 14 ist eine Ventileinrichtung 24 verbunden, welche in nicht näher beschriebener Weise ein wahlweises Auffüllen des Füllraumes 18 mit Trinkwasser ermöglicht. Mit Austritt aus der Ventileinrichtung 24 wird das bis dahin geführte Leitungswasser in dem Füllraum 18 der Tränkebeckenschale 12 zu Trinkwasser.

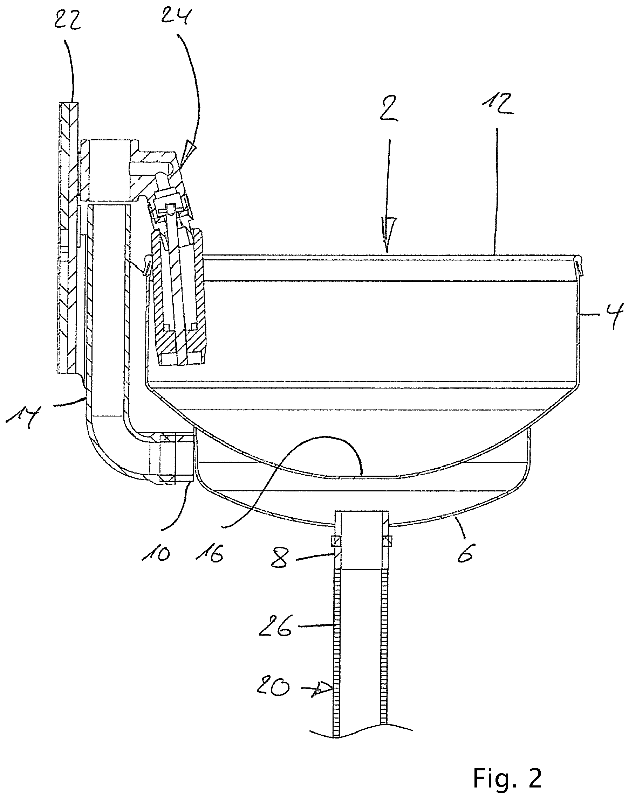

Die in Fig. 2 abgebildete Schnittansicht zeigt nun, dass der Abschnitt der Außenwandung 4, der den Grundkörper von dem Außenkörper 6 trennt, zumindest abschnittsweise konvex ausgebildet ist. Der Grundkörper ist somit in seinem Bodenbereich 16 bauchig ausgebildet. Der Außenkörper 6 überdeckt einen Anteil des Bodenbereichs 16, der geeignet ist, um einen Frostschutz des in dem Füllraum 18 vorhandenen Trinkwassers zu gewährleisten. Es ist folglich ein Behälter mit einem doppelten Boden geschaffen. Der Außenkörper 6 sowie der Leitungsabschnitt 14 bilden jeweils beide einen Abschnitt einer Flüssigkeitsleitung 20 aus, welche eine Flüssigkeit bzw. Leitungswasser zum Auffüllen des Grundkörpers führt. Der Verlauf der Flüssigkeitsleitung 20 soll im Folgenden beschrieben werden. Die Flüssigkeit bzw. das Leitungswasser durchströmt eine Gebäudewasserleitung 26, an deren beckenseitigem Ende ein Zulauf 8 für den Außenkörper 6 angeordnet ist. Das durch den Zulauf 8 strömende Leitungswasser trifft auf den konvex ausgebildeten Abschnitt der Außenwandung 4, der eine Leitfläche für das einströmende Leitungswasser ausbildet. Der Außenkörper 6 ist derart ausgebildet, dass das darin befindbare Leitungswasser zum Wärmeaustausch in direkten Kontakt mit der Außenwandung 4 des Grundkörpers kommen kann. Von entscheidender Bedeutung sind hierbei der Druck der in der Flüssigkeitszuleitung 20 geführten Flüssigkeit, der Größe der Überdeckung am Bodenbereich 16 und das Aufnahmevolumen des Außenkörpers 6. Der Außenkörper 6 hat einen wesentlich größeren Leitungsdurchmesser als die Gebäudewasserleitung 26, was zu erheblichen Turbulenzen in dem Leitungswasser des Außenkörpers 6 und zu verbesserter Wärmeübertragung führt. Das Leitungswasser durchströmt den Außenkörper 6, gibt seine Wärme an die Außenwandung 4 ab und tritt durch einen Ablauf 10 aus dem Außenkörper 6 in den Leitungsabschnitt 14 hinaus. Der Leitungsabschnitt 14 führt in beschriebener Weise das Leitungswasser zu dem Ventil 24, worauf es als Trinkwasser wahlweise in den Füllraum 18 des Grundkörpers gelangen kann. Die Strömungsrichtung hinsichtlich des Zulaufs und des Ablaufs kann auch in umgekehrter Richtung liegen.

Es ist zu erkennen, dass der Außenkörper 6 außerhalb des Füllraums bzw. an der dem Füllraum 18 abgewandten Außenseite der Außenwandung 4 angeordnet ist. Mit anderen Worten würde ein Entfernen des Außenkörpers 6 dazu führen, dass das Füllraumvolumen des Grundkörpers gleich bliebe.

Es ist zudem insbesondere in Fig. 2 erkennbar, dass der Behälter und insbesondere dessen Grundkörper frei von einer Erhitzungsvorrichtung zum Frostschutz ist. Mit anderen Worten ist beispielsweise kein Heizkabel oder keine Heizplatte vorgesehen.

Mit der vorgeschlagenen Erfindung ist ein Behälter ausbildbar, der in einfacher Weise einen Frost- und Gesundheitsschutz gewährleistet.

### Bezugszeichen

- 2: Behälter
- 4: Außenwandung
- 6: Außenkörper
- 8: Zulauf
- 10: Ablauf
- 12: Tränkebeckenschale
- 14: Leitungsabschnitt
- 16: Bodenbereich
- 18: Füllraum
- 20: Flüssigkeitszuleitung
- 22: Wandhalterung
- 24: Ventil
- 26: Gebäudewasserleitung
- 28: Ausnehmung

## Patentansprüche

1. Behälter (2) für Flüssigkeit, umfassend einen zumindest abschnittsweise schalenartigen Grundkörper mit einer Außenwandung (4), die einen Füllraum (18) definiert, einen Außenkörper (6), der die Außenwandung (4) des Grundkörpers zumindest abschnittsweise überdeckt, einen Zulauf (8) für Flüssigkeit in den Außenkörper (6), einen Ablauf (10) für Flüssigkeit aus dem Außenkörper (6), wobei der Außenkörper (6) derart ausgebildet ist, dass die in ihm befindbare Flüssigkeit zum Wärmeaustausch in Kontakt mit der Außenwandung (4) des Grundkörpers kommen kann.

2. Behälter nach Anspruch 1,
wobei der Behälter (2), insbesondere der Grundkörper, frei von einer Erhitzungsvorrichtung zum Frostschutz ist.

3. Behälter nach einem der vorangehenden Ansprüche, wobei der Außenkörper (6) derart ausgebildet ist, dass die in dem Außenkörper (6) befindbare Flüssigkeit zum Wärmeaustausch in direkten Kontakt mit der Außenwandung (4) des Grundkörpers kommen kann.

4. Behälter nach einem der vorangehenden Ansprüche, wobei der Grundkörper eine Tränkebeckenschale (12) für Haus- und/oder Nutztiere ist.

5. Behälter nach einem der vorangehenden Ansprüche, weiter umfassend einen Leitungsabschnitt (14) zum Leiten der Flüssigkeit aus dem Ablauf (10) direkt oder indirekt in den Grundkörper.

6. Behälter nach einem der vorangehenden Ansprüche, wobei der Außenkörper (6) einen Abschnitt einer Flüssigkeitszuleitung (20) und/oder einer Flüssigkeitsableitung für den Grundkörper ausbildet.

7. Behälter nach einem der vorangehenden Ansprüche, wobei der Außenkörper (6) an der einen vorzugsweise zentralen Bodenbereich (16) des Grundkörpers ausbildenden Außenwandung (4) angeordnet ist.

8. Behälter nach einem der vorangehenden Ansprüche, wobei der Außenkörper (6) 50% bis 100% des Bodenbereich (16), vorzugsweise 75% bis 100% des Bodenbereichs (16), noch mehr bevorzugt einen Anteil des Bodenbereichs (16) überdeckt, der geeignet ist, um einen Frostschutz zu gewährleisten.

9. Behälter nach einem der vorangehenden Ansprüche, wobei der Abschnitt der Außenwandung (4), der den Grundkörper von dem Außenkörper (6) trennt, zumindest abschnittsweise konvex und/oder planar ausgebildet ist.

10. Behälter nach einem der vorangehenden Ansprüche, wobei der Außenkörper (6) druckfest und/oder formschlüssig und/oder stoffschlüssig mit dem Grundkörper verbunden ist.

11. Behälter nach einem der vorangehenden Ansprüche, wobei der Außenkörper (6) an der dem Füllraum (18) abgewandten Außenseite der Außenwandung (4) angeordnet ist.
